# EUROPÄISCHE PATENTSCHRIFT

(11) **EP 3 564 112 B1**
(45) Veröffentlichungstag und Bekanntmachung des Hinweises auf die Patenterteilung: **28.06.2023**
(21) Anmeldenummer: 19171767.7
(22) Anmeldetag: 30.04.2019
(51) Int. Cl.: B62M 6/90, B62K 19/40, B62J 43/13, B62J 43/28, H01M 50/262, H01M 50/271

(54) **AKKUEINHEIT, SET MIT EINER AKKUEINHEIT UND EINER AUFNAHMEEINRICHTUNG ZUR AUFNAHME DER AKKUEINHEIT UND FAHRRADRAHMEN MIT EINEM DERARTIGEN SET**
BATTERY UNIT, SET COMPRISING A BATTERY UNIT AND A RECEIVING DEVICE FOR RECEIVING THE BATTERY UNIT AND BICYCLE FRAME COMPRISING SUCH A SET
UNITÉ D'ACCUMULATEUR, ENSEMBLE DOTÉ D'UNE UNITÉ D'ACCUMULATEUR ET D'UN DISPOSITIF DE LOGEMENT PERMETTANT DE LOGER L'UNITÉ D'ACCUMULATEUR ET CADRE DE BICYCLETTE DOTÉ D'UN TEL ENSEMBLE

(30) Priorität: 03.05.2018 DE 102018206821
(43) Veröffentlichungstag der Anmeldung: 06.11.2019
(73) Patentinhaber: YT Industries GmbH, 91353 Hausen (DE)
(72) Erfinder: Wecker, Daniel, 91301 Forchheim (DE); Lehne, Tobias, 91301 Forchheim (DE); Willared, Stefan, 91352 Pautzfeld (DE); Bax, Stefan, 90489 Nürnberg (DE); Bosert, Martin, 91301 Forchheim (DE)
(74) Vertreter: Rau, Schneck & Hübner Patentanwälte Rechtsanwälte PartGmbB

(56) Entgegenhaltungen:
- EP-A1- 2 871 125
- EP-A2- 3 109 146
- CN-A- 107 672 723
- DE-A1-102017 005 808
- DE-A1-102018 200 891
- JP-B2- 3 137 316

## Beschreibung

Die Erfindung betrifft eine Akkueinheit für eine Antriebsvorrichtung für ein Fahrrad. Außerdem betrifft die Erfindung ein Set mit einer Akkueinheit und einer Aufnahmeeinrichtung zur Aufnahme der Akkueinheit. Schließlich betrifft die Erfindung einen Fahrradrahmen mit einem derartigen Set. Die Erfindung betrifft weiterhin einen Fahrradrahmen. Schließlich betrifft die Erfindung eine Akkueinheit für eine Antriebsvorrichtung für ein Fahrrad.

Es gibt unterschiedliche Varianten von Fahrrädern mit Elektromotor. Bei derartigen Fahrrädern ist üblicherweise ein Akku am Fahrrad befestigt.

Aus der EP 3 109 146 A2 ist ein Fahrradrahmen zur Aufnahme einer Batterie bekannt, wobei die Batterie zum Antreiben eines Elektromotors dient. Unterschiedliche Befestigungskonzepte für eine Fahrrad-Batterieeinheit sind aus der DE 10 2018 200 891 A1 bekannt.

EP 3 109 146 offenbart die folgenden Merkmale des Anspruchs 1; eine Akkueinheit für eine Antriebsvorrichtung für ein Fahrrad aufweisend, mindestens einen Akku, ein Gehäuse zur Aufnahme des mindestens einen Akkus mit mindestens einem Aufnahme-Element zur Aufnahme mindestens eines Halte-Elements zum Befestigen der Akkueinheit in oder an einem Fahrradrahmen und wobei das mindestens eine Halte-Element eine Steckachse umfasst, welche durch das mindestens eine Aufnahme-Element gesteckt ist.

Eine Aufgabe der Erfindung besteht darin, eine Akkueinheit für eine Antriebsvorrichtung für ein Fahrrad zu verbessern.

Diese Aufgabe wird durch eine Akkueinheit gemäß Anspruch 1 gelöst. Der Kern der Erfindung besteht darin, die Akkueinheit mit einem Gehäuse zur Aufnahme des mindestens einen Akkus auszubilden, wobei das Gehäuse mindestens ein Aufnahme-Element zur Aufnahme mindestens eines Halteelements zum Befestigen der Akkueinheit in oder an einem Fahrradrahmen aufweist, und wobei mindestens ein mit dem Aufnahme-Element zusammenwirkendes Entkopplungs-Element zum zumindest teilweisen mechanischen Entkoppeln des im Aufnahme-Element aufgenommenen Halte-Elements vom Gehäuse vorgesehen ist.

Das Entkopplungs-Element ermöglicht es insbesondere, die Akkueinheit von auf den Rahmen des Fahrrads wirkenden Belastungen zu entkoppeln.

Gemäß einem Aspekt der Erfindung umfasst das mindestens eine Entkopplungs-Element eine Steckachse, welche durch das mindestens eine Aufnahme-Element gesteckt ist.

Die Steckachse kann insbesondere aus Aluminium sein.

Die Achse ist vorzugsweise entlang ihrer Axialrichtung verschiebbar. Dies ermöglicht eine schwimmende Lagerung des Gehäuses der Akkueinheit auf der Steckachse.

Das Entkopplungs-Element kann einteilig oder mehrteilig ausgebildet sein. Im Folgenden wird auch die Variante einer mehrteiligen Ausführung des Entkopplungs-Elements als Entkopplungs-Element nicht als Entkopplungs-Einrichtung bezeichnet.

Gemäß einem Aspekt der Erfindung umfasst das mindestens eine Entkopplungs-Element mindestens ein elastisches und/oder flexibles Bauteil, mittels welchem die Steckachse in dem Aufnahme-Element gehalten ist.

Durch die Elastizität und/oder Flexibilität dieses Bauteils wird eine zumindest teilweise mechanische Entkopplung der Steckachse vom Gehäuse der Akkueinheit ermöglicht. Hierdurch ist es insbesondere möglich, Kräfte, insbesondere Torsionskräfte, welche auf den Rahmen des Fahrrads wirken, vom Gehäuse der Akkueinheit zu entkoppeln.

Das elastische und/oder flexible Bauteil ermöglicht außerdem eine gedämpfte Lagerung des Gehäuses der Akkueinheit. Hierdurch werden die elektrischen/elektronischen Komponenten geschützt. Dies führt zu einer besseren Haltbarkeit.

Das elastische und/oder flexible Bauteil kann insbesondere als Reduzierhülse, welche in das mindestens eine Aufnahme-Element eingesetzt ist, ausgebildet sein. Die Reduzierhülse kann ein- oder mehrteilig ausgebildet sein. Es können insbesondere zwei Reduzierhülsen vorgesehen sein, welche von entgegengesetzten Seiten in die Aufnahme gesteckt werden.

Vorzugsweise können die Reduzierhülsen jeweils eine Anlageschulter aufweisen, welche von außen an dem Aufnahme-Element anliegt.

Die Reduzierhülsen können in dem in das Aufnahme-Element einzuführenden Bereich einen Außendurchmesser aufweisen, welcher gerade dem Innendurchmesser des Aufnahme-Elements entspricht. Sie können insbesondere formschlüssig am Aufnahme-Element anliegen.

Die Reduzierhülse ermöglicht eine Halterung der Steckachse im Aufnahme-Element. Die Steckachse kann insbesondere reibschlüssig im Aufnahme-Element gehalten sein. Sie kann hierbei entlang ihrer Axialrichtung verschiebbar sein.

Gemäß einem vorteilhaften Aspekt der Erfindung kann die Steckachse aufgrund der Elastizität und/oder Flexibilität des Bestandteils des Entkopplungs-Elements verkippbar im Aufnahme-Element angeordnet sein. Selbst ein sehr kleiner Verkippbarkeitsbereich genügt hierbei, um die Belastungen auf das Gehäuse der Akkueinheit spürbar zu reduzieren. Durch die Verkippbarkeit ist es insbesondere möglich, die Übertragung von Torsionskräften vom Fahrradrahmen auf das Gehäuse der Akkueinheit zu reduzieren, insbesondere - zumindest weitestgehend - zu eliminieren.

Gemäß einem weiteren Aspekt der Erfindung kann am Gehäuse ein zweites Aufnahme-Element zur Aufnahme eines weiteren Halte-Elements zum Befestigen der Akkueinheit in oder an einem Fahrradrahmen vorgesehen sein.

Das zweite Aufnahme-Element kann insbesondere als Langloch ausgebildet sein. Es weist vorzugsweise eine Erstreckung parallel zur Längsrichtung der Akkueinheit auf. Das Langloch bildet ein zweites Entkopplungselement. Es ermöglicht insbesondere Toleranzen in Längsrichtung der Akkueinheit.

Gemäß einem nicht beanspruchten Aspekt der Erfindung weist die Akkueinheit mindestens zwei Entkopplungselemente auf, wobei eines der Entkopplungselemente zu einer Entkopplung oder Toleranz in Längsrichtung der Akkueinheit führt, und wobei mindestens ein anderes der Entkopplungselemente zu einer Entkopplung oder Toleranz in Querrichtung und/oder gegenüber Verdrehungen um die Längsachse führt.

Durch ein oder mehrere Entkopplungs-Elemente wird insbesondere eine schwimmende Lagerung der Akkueinheit, insbesondere eine Entkopplung des Gehäuses der Akkueinheit vom Fahrradrahmen, ermöglicht.

Gemäß einem weiteren Aspekt der Erfindung ist die Steckachse als Hohlachse ausgebildet.

Sie bildet insbesondere eine Aufnahme für ein Halteelement, mittels welchem sie im oder am Fahrradrahmen befestigt werden kann.

Gemäß einem weiteren Aspekt der Erfindung weist die Steckachse in ihrer Axialrichtung ein Spiel relativ zum Gehäuse der Akkueinheit auf.

Die Länge der Steckachse ist derart anpassbar, dass sie in Axialrichtung kein Spiel zum Fahrradrahmen aufweist.

Gemäß einem weiteren Aspekt der Erfindung weist die Steckachse an mindestens einem Ende einen Gewindeabschnitt auf. Sie kann auch an beiden Enden jeweils einen Gewindeabschnitt aufweisen. Hierbei kann es sich um ein Außengewinde zum Aufschrauben eines Anlageelements handeln.

Die Steckachse kann insbesondere im Bereich eines ihrer Enden eine Anlagefläche, insbesondere in Form eines Schraubenkopfs, insbesondere in Form einer Sechskantschraube, aufweisen. Sie weist in diesem Fall vorzugsweise am gegenüberliegenden Ende einen Außengewindeabschnitt auf, auf welchem ein Anlageelement in Form einer Sechskantmutter aufschraubbar ist. Mit Hilfe des Außengewindes ist es möglich, das Anlageelement unterschiedlich weit auf die Steckachse aufzuschrauben. Hierdurch ist die effektive Länge der Steckachse anpassbar. Die Länge der Steckachse kann insbesondere derart anpassbar sein, dass sie beidseitig von innen an einer hierfür vorgesehenen Anlagefläche im Fahrradrahmen oder einer speziellen Aufnahmeeinrichtung anliegt.

Gemäß einer Alternative weist die Steckachse beidseitig ein Innengewinde zur Aufnahme eines Halteelements, insbesondere in Form einer Schraube, auf. Dies ermöglicht eine direkte Fixierung der Steckachse in oder an der Aufnahmeeinrichtung oder einem Fahrradrahmen.

Gemäß einem weiteren Aspekt der Erfindung ist die Steckachse mehrteilig ausgebildet, wobei ein Teil mit einem Gewindeabschnitt über eine Steckverbindung mit einem weiteren Teil verbunden ist.

Dies führt dazu, dass die Steckachse eine variable Länge aufweist. Hierdurch können auf den Fahrradrahmen oder die Aufnahmeeinrichtung wirkende Kräfte reduziert werden.

Gemäß einem weiteren Aspekt der Erfindung ist das mindestens eine Aufnahme-Element reversibel von außen am Gehäuse der Akkueinheit befestigt. Vorzugsweise sind beide Aufnahme-Elemente reversibel von außen am Gehäuse der Akkueinheit befestigt. Das oder die Aufnahme-Elemente sind vorzugsweise austauschbar.

Das oder die Austausch-Elemente sind insbesondere mit dem Gehäuse der Akkueinheit verschraubt. Sie können insbesondere jeweils mittels vier Schrauben, insbesondere in Form von Inbus- oder Torx-Schrauben mit dem Gehäuse der Akkueinheit verschraubt sein. Dies ermöglicht eine sichere, austauschbare Verbindung der Aufnahme-Elemente mit dem Gehäuse der Ackueinheit.

Gemäß einem weiteren Aspekt der Erfindung weist die Akkueinheit eine Abdeckung zum Verschließen einer Aufnahmeeinrichtung zur Aufnahme der Akkueinheit auf, wobei die Abdeckung reversibel am Gehäuse fixierbar ist.

Mittels der Abdeckung ist insbesondere eine Aufnahmeöffnung, durch welche die Akkueinheit in die Aufnahmeeinrichtung und/oder den Fahrradrahmen einführbar ist, zuverlässig, insbesondere dicht, insbesondere wasserdicht, verschließbar.

Als Abdeckung kann insbesondere eine Platte aus Metall, Kunststoff oder Faserverbundstoff vorgesehen sein.

Die Abdeckung ist vorzugsweise mit dem Gehäuse der Akkueinheit verschraubt.

Gemäß einem weiteren nicht beanspruchten Aspekt der Erfindung ist die Abdeckung in einer am Gehäuse der Akkueinheit ausgebildeten Nut geführt gelagert. Die Abdeckung kann insbesondere auf das Gehäuse der Akkueinheit aufgeschoben und dort mittels Schrauben fixiert werden.

Die Abdeckung ist vorzugsweise austauschbar.

Gemäß einem weiteren nicht beanspruchten Aspekt der Erfindung ist die Abdeckung als Profilelement ausgebildet.

Sie kann insbesondere einen U-förmigen Querschnitt aufweisen. Sie kann vorzugsweise als Platte mit seitlich vorstehenden Schenkeln ausgebildet sein.

Eine weitere Aufgabe der Erfindung besteht darin, die Anordnung einer Akkueinheit für eine Antriebsvorrichtung für ein Fahrrad am Fahrrad zu verbessern.

Diese Aufgabe wird durch ein Set mit einer Akkueinheit gemäß der vorliegenden Erfindung und einer Aufnahmeeinrichtung zur Aufnahme der Akkueinheit gelöst.

Der Kern der Erfindung besteht darin, die Akkueinheit schwimmend in der Aufnahmeeinrichtung zu lagern.

Hierdurch werden Belastungen auf das Gehäuse der Akkueinheit reduziert.

Gemäß einem Aspekt der Erfindung ist es möglich, die Akkueinheit mittels zweier Durchsteckbolzen reversibel in der Aufnahmeeinrichtung zu fixieren.

Hierdurch wird eine besonders einfache und sichere Fixierung der Akkueinheit in der Aufnahmeeinrichtung ermöglicht.

Die Akkueinheit ist vorzugsweise schwimmend in der Aufnahmeeinrichtung, insbesondere im Fahrradrahmen, gelagert. Hierunter sei verstanden, dass sich die Akkueinheit relativ zur Aufnahmeeinrichtung, insbesondere relativ zum Rahmen des Fahrrads, verschieben und/oder verdrehen kann. Der maximale Bewegungsumfang der Akkueinheit kann hierbei sehr klein sein. Er entspricht jedoch dem Umfang der maximalen Verformbarkeit des Bestandteils des Fahrradrahmens, in welches die Akkueinheit eingesetzt wird. Er entspricht insbesondere der maximalen Verformbarkeit des Unterrohrs des Fahrradrahmens beim normalen Gebrauch des Fahrrads, insbesondere im Downhill-Einsatz. Dies führt insbesondere dazu, dass eine Übertragung von Torsionskräften vom Rahmen auf das Gehäuse der Akkueinheit reduziert, insbesondere vermieden, wird.

Die Aufnahmeeinrichtung ist insbesondere im Fahrradrahmen, beispielsweise im Unterrohr, im Sattelrohr oder im Oberrohr integriert. Sie kann insbesondere fest mit dem Fahrradrahmen verbunden und mit diesem einteilig ausgebildet sein. Insbesondere weist die Aufnahmeeinrichtung eine Einführöffnung auf, durch welche die Akkueinheit aufgenommen wird.

Gemäß einem Aspekt der Erfindung weist zumindest einer der Durchsteckbolzen, insbesondere beide, einen Gewindeabschnitt auf.

Bei den Durchsteckbolzen kann es sich insbesondere um Schrauben handeln.

Gemäß einem weiteren Aspekt der Erfindung ist ein hierzu passender Gewindeabschnitt in der Aufnahmeeinrichtung vorgesehen. Der oder die Durchsteckbolzen können insbesondere in die Aufnahmeeinrichtung einschraubbar sein. Es kann auch vorgesehen sein, eine zum Gewindeabschnitt des oder der Durchsteckbolzen passende Mutter in den Fahrradrahmen zu integrieren.

Gemäß einer Alternative werden die Durchsteckbolzen mittels einer separaten Mutter fixiert.

Die Durchsteckbolzen können jeweils durch eine Durchstecköffnung eines Gehäuses der Akkueinheit durchgesteckt werden. Sie können auch mit der Akkueinheit verschraubt werden.

Die Durchsteckbolzen können jeweils durch eine oder zwei Durchstecköffnungen der Aufnahmeeinrichtung hindurchgesteckt werden. Sie können auch mit der Aufnahmeeinrichtung verschraubt werden.

Die Durchsteckbolzen durchdringen insbesondere jeweils mindestens eine Öffnung in der Aufnahmeeinrichtung und/oder der Akkueinheit, insbesondere einem Gehäuse derselben, vollständig. Vorteilhafterweise ist mindestens eine dieser Öffnungen in der Aufnahmeeinrichtung und/oder der Akkueinheit als Langloch ausgebildet. Hierdurch kann ein Toleranzausgleich gewährleistet werden.

Die Durchsteckbolzen können jeweils einen konischen Bereich, insbesondere einen konischen Kopf, aufweisen. Dies kann zu einer zentrierenden Klemmung der Akkueinheit in der Aufnahmeeinrichtung genutzt werden.

Gemäß einem weiteren Aspekt der Erfindung ist mindestens ein Bestandteil der Akkueinheit spielfrei in der Aufnahmeeinrichtung fixierbar.

Hierdurch kann insbesondere ein unerwünschtes Klappern der Akkueinheit in der Aufnahmeeinrichtung vermieden werden.

Gemäß einem weiteren nicht beanspruchten Aspekt der Erfindung ist die Akkueinheit mittels einer Führung, insbesondere einer Kulissenführung, in die Aufnahmeeinrichtung einführbar. Sie kann insbesondere schräg, insbesondere unter einem Winkel im Bereich von 10° bis 60°, insbesondere im Bereich von weniger als 45°, zur Längsachse eines Rahmenrohres, in welchem die Aufnahmeeinrichtung angeordnet ist, einführbar sein. Insbesondere weist die Akkueinheit hierfür eine Abdeckplatte auf. Die Abdeckplatte ist vorteilhafterweise einteilig mit dem Gehäuse der Akkueinheit ausgebildet.

Gemäß einem weiteren Aspekt der Erfindung kann die Abdeckplatte derart ausgebildet sein, dass diese an das Gehäuse der Akkueinheit montierbar, insbesondere anschraubbar oder ansteckbar, ist.

Gemäß einem weiteren nicht beanspruchten Aspekt der Erfindung ist die Aufnahmeeinrichtung flüssigkeitsdicht ausgebildet. Sie kann insbesondere mittels der Akkueinheit flüssigkeitsdicht verschließbar sein. Vorteilhafterweise ist an der zur Aufnahmeeinrichtung gerichteten Innenseite der Abdeckplatte eine elastische Dichtlippe angeordnet, welche beim Einbringen der Akkueinheit in die Aufnahmeeinrichtung diese flüssigkeitsdicht verschließt.

Gemäß einem weiteren Aspekt der Erfindung ist mindestens ein weiteres, separates Fixier- und/oder Klemmmittel zur Fixierung und/oder Verklemmung der Akkueinheit in der Aufnahmeeinrichtung vorgesehen. Hierdurch kann der Sitz der Akkueinheit in der Aufnahmeeinrichtung weiter verbessert werden.

Gemäß einem weiteren nicht beanspruchten Aspekt der Erfindung ist die Akkueinheit werkzeuglos in der Aufnahmeeinrichtung fixierbar. Sie ist insbesondere manuell reversibel in die Aufnahmeeinrichtung einsetzbar. Sie kann insbesondere werkzeuglos aus der Aufnahmeeinrichtung entnehmbar sein.

Alternativ hierzu kann es vorteilhaft sein, die Akkueinheit und/oder die Aufnahmeeinrichtung derart auszubilden, dass die Akkueinheit lediglich mit Hilfe eines Spezialwerkzeugs aus der Aufnahmeeinrichtung entnehmbar ist. Sie kann insbesondere verschließbar in der Aufnahmeeinrichtung angeordnet sein. Zur Entnahme der Akkueinheit aus der Aufnahmeeinrichtung ist in diesem Fall ein spezieller Schlüssel notwendig. Dies bietet einen Schutz gegen ein unerwünschtes Entfernen der Akkueinheit aus der Aufnahmeeinrichtung, insbesondere einen Schutz gegen Diebstahl.

Eine weitere Aufgabe der Erfindung besteht darin, einen Fahrradrahmen zu verbessern.

Diese Aufgabe wird durch einen Fahrradrahmen mit einem Set gemäß der vorhergehenden Beschreibung gelöst.

Die Vorteile ergeben sich aus dem vorgehend Beschriebenen.

Die Aufgabe wird insbesondere durch einen Fahrradrahmen mit einer Aufnahmeeinrichtung zur Aufnahme einer Akkueinheit für eine Antriebsvorrichtung gelöst, wobei die Aufnahmeeinrichtung ein erstes und ein zweites Halte- oder Fixierelement zur Fixierung mindestens eines Bestandteils der Akkueinheit aufweist, wobei das erste Halte- oder Fixierelement derart ausgebildet ist, dass es eine rotatorische oder eine lineare Einführung der Akkueinheit in die Aufnahmeeinrichtung ermöglicht und wobei das zweite Halte- oder Fixierelement derart ausgebildet ist, dass es eine lösbare Fixierung mindestens eines Bestandteils der Akkueinheit, insbesondere deren Steckachse, in die Aufnahmeeinrichtung ermöglicht.

Die beiden Fixierelemente sind in einer Längsrichtung der Aufnahmeeinrichtung um einen Abstand d voneinander beabstandet. Der Abstand d liegt insbesondere im Bereich von 5 cm bis 50 cm, insbesondere im Bereich von 10 cm bis 40 cm.

Mittels der Aufnahmeeinrichtung wird eine vorgegebene Endposition für die Akkueinheit definiert. Hierunter sei die Position der Akkueinheit im vollständig in die Aufnahmeeinrichtung eingesetzten, insbesondere im fixierten Zustand, bezeichnet.

Gemäß einem nicht beanspruchten Aspekt der Erfindung kann die Endposition justierbar sein. Sie kann insbesondere mit Hilfe eines oder beider der Fixierelemente justierbar sein.

Gemäß einem weiteren nicht beanspruchten Aspekt der Erfindung ist die Aufnahmeeinrichtung vollständig einem Rohr des Fahrradrahmens integriert. Sie kann insbesondere im Unterrohr, im Oberrohr oder im Sattelrohr des Fahrradrahmens integriert sein.

Die Aufnahmeeinrichtung kann insbesondere einen Bestandteil des Fahrradrahmens bilden.

Sie kann insbesondere derart im Unterrohr des Fahrradrahmens integriert sein, dass die Akkueinheit von unten in die Aufnahmeeinrichtung einsetzbar ist. Die Oberseite des Unterrohrs kann dadurch unverändert für Anbauteile, beispielsweise einen Flaschenhalter, oder zur Anlenkung eines gefederten Hinterbaus des Fahrrads verwendet werden.

Gemäß einem weiteren nicht beanspruchten Aspekt der Erfindung ist die Aufnahmeeinrichtung und/oder die Akkueinheit, insbesondere deren Gehäuse, derart ausgebildet, dass sie zu einer Verstärkung, insbesondere zu einer Versteifung, insbesondere in Querrichtung, des Fahrradrahmens in diesem Bereich beitragen. Sie können insbesondere profilierte Elemente aufweisen, welche sich in Längsrichtung erstrecken.

Gemäß einem weiteren nicht beanspruchten Aspekt der Erfindung ist die Akkueinheit, insbesondere deren Gehäuse, derart ausgebildet, das daraus eine Reduzierung der vom Fahrradrahmen auf das Akkugehäuse übertragenen Kräfte resultiert. Vorteilhafterweise weist das Gehäuse hierzu an Berührungsflächen mit den Fixierelementen elastische Zwischenelemente auf, welche die auftretenden Kräfte im Fahrradrahmen dämpfen. Insbesondere sind die Zwischenelemente aus Gummi ausgebildet.

Eine Ausbildung der Zwischenelemente aus anderen Materialien, welche ebenfalls eine Dämpfungsfunktion aufweisen, ist ebenfalls denkbar.

Gemäß einem weiteren nicht beanspruchten Aspekt der Erfindung ist die Akkueinheit vollständig im Fahrradrahmen integrierbar. Die Akkueinheit kann insbesondere derart ausgebildet sein, dass die Kontur des jeweiligen Rahmenrohrs, insbesondere der sich an die Aufnahmeeinrichtung anschließenden Bereiche, im eingesetzten Zustand der Akkueinheit durch deren Oberfläche vervollständigt wird. Die Kontur des jeweiligen Rahmenrohrs kann insbesondere formschlüssig, im Wesentlichen kantenfrei, durch die Oberfläche der Akkueinheit, insbesondere deren Gehäuse, vervollständigt werden.

Gemäß einem weiteren nicht beanspruchten Aspekt der Erfindung sind die Aufnahmeeinrichtung und die Akkueinheit zumindest bereichsweise komplementär zueinander ausgebildet. Die Aufnahmeeinrichtung kann insbesondere einen formschlüssigen Sitz für die Akkueinheit bilden.

Die Aufnahmeeinrichtung weist insbesondere einen Innenquerschnitt auf. Die Akkueinheit weist insbesondere einen Außenquerschnitt auf. Hierbei sind der Innenquerschnitt der Aufnahmeeinrichtung und der Außenquerschnitt der Akkueinheit insbesondere derart aneinander angepasst, dass sie mehrere Anlageflächen bilden.

Gemäß einem weiteren nicht beanspruchten Aspekt der Erfindung weist die Akkueinheit und/oder die Aufnahmeeinrichtung einen sich in Längsrichtung verändernden Querschnitt auf. Es ist insbesondere möglich, auf einem der beiden Elemente stift- oder rippenartige Vorsprünge auszubilden, welche mit dazu passenden Aussparungen, insbesondere Nuten, zusammenwirken. Auf diese Weise kann der Sitz der Akkueinheit in der Aufnahmeeinrichtung und damit im Fahrradrahmen weiter verbessert werden. Die Akkueinheit kann dadurch insbesondere beim Fixieren zusätzlich entlang einer Kulisse geführt und damit zusätzlich verklemmt werden.

Gemäß einer besonders vorteilhaften nicht beanspruchten Ausführungsform können die Nuten derart ausgebildet sein, dass die Akkueinheit beim Einsetzen in die Aufnahmeeinrichtung in eine Übertotpunktstellung gebracht wird. Hierdurch kann die Gefahr eines unbeabsichtigten Herausfallens der Akkueinheit aus der Aufnahmeeinrichtung weiter reduziert werden. Vorzugsweise wird die Akkueinheit in diesem Fall durch ein oder mehrere elastische Mittel in ihre Endposition in der Aufnahmeeinrichtung gedrückt.

Gemäß einem weiteren nicht beanspruchten Aspekt der Erfindung ist das zweite Fixierelement derart ausgebildet, dass es eine spielfreie Fixierung der Akkueinheit in der Aufnahmeeinrichtung ermöglicht.

Es kann insbesondere formschlüssig mit der Akkueinheit zusammenwirken. Es kann auch klemmend mit der Akkueinheit zusammenwirken.

Gemäß einem weiteren nicht beanspruchten Aspekt der Erfindung weist das zweite Fixierelement der Aufnahmeeinrichtung eine Auswahl aus folgende Liste auf: ein Kniehebelgelenk, insbesondere ein Kniehebelgelenk mit einer Übertotpunktstellung, eine Exzenterschraube, welche insbesondere als Spiralexzenterschraube ausgebildet ist, eine Klemmplatte, einen Spannhebel, welcher das Gehäuse der Akkueinheit axial zur Schwenkachse des Spannhebels spannt, einen Verrastmechanismus, einen oder mehrere Magnete.

Gemäß einem weiteren nicht beanspruchten Aspekt der Erfindung ist mindestens ein zusätzliches Fixiermittel zur Fixierung der Akkueinheit in der Aufnahmeeinrichtung vorgesehen. Das zusätzliche Fixiermittel dient insbesondere zur Fixierung der Akkueinheit in der vollständig in die Aufnahmeeinrichtung eingesetzten Stellung.

Als Fixiermittel kann beispielsweise eine Schraube, insbesondere eine Klemmschraube, vorgesehen sein. Mit Hilfe der Klemmschraube kann die Akkueinheit im Fahrradrahmen und/oder in der Aufnahmeeinrichtung verklemmt werden. Die Klemmschraube kann auch mit einem der Fixierelemente zusammenwirken.

Als Fixiermittel kann auch ein Keil, eine Exzenterscheibe, ein Kniehebelgelenk, insbesondere ein Kniehebelgelenk mit einer Übertotpunktstellung, oder ein anderes Fixiermittel dienen.

Das zusätzliche Fixiermittel kann unabhängig von den Fixierelementen der Aufnahmeeinrichtung sein, insbesondere unabhängig von diesen mit der Akkueinheit zusammenwirken. Das zusätzliche Fixiermittel kann auch mit einem oder beiden der Fixierelemente der Aufnahmeeinrichtung zusammenwirken.

Gemäß einem weiteren nicht beanspruchten Aspekt der Erfindung ist ein elastisches Mittel vorgesehen, welches im vollständig in die Aufnahmeeinrichtung eingesetzten Zustand der Akkueinheit zwischen der Aufnahmeeinrichtung und der Akkueinheit angeordnet ist. Es liegt in diesem Zustand insbesondere an beiden an. Es ist in diesem Zustand insbesondere leicht komprimiert. Hierdurch wird eine Kraft auf die Akkueinheit ausgeübt. Dies führt zu einem besonders sicheren, verwackelungsfreien Sitz der Akkueinheit in der Aufnahmeeinrichtung.

Es kann insbesondere vorgesehen sein, einen Bereich der Aufnahmeeinrichtung mit einer Lage aus einem elastischen Material auszukleiden. Dies kann auch zum Ausgleich von Toleranzen dienen.

Gemäß einem weiteren nicht beanspruchten Aspekt der Erfindung ist das erste Fixierelement der Aufnahmeeinrichtung zur Zusammenwirkung mit einem Komplementärelement an der Akkueinheit ausgebildet. Eines dieser beiden Elemente ist insbesondere als Achse ausgebildet.

Das andere Element kann gabelförmig, das heißt mit einem C-förmigen Querschnitt, stiftförmig, klauenförmig oder als Einhängelasche ausgebildet sein. Hierbei kann insbesondere die freie Weite des Aufnahmebereichs verstellbar sein, insbesondere mit Hilfe einer Klemmschraube.

Die Achse kann sich über die gesamte Breite der Aufnahmeeinrichtung erstrecken. Alternativ hierzu können auch auf gegenüberliegenden Seiten der Aufnahmeeinrichtung bolzenartige Vorsprünge vorgesehen sein. Mit Hilfe einer durchgehenden Achse kann die Quersteifigkeit der Aufnahmeeinrichtung erhöht werden. Zur Gewichtsersparnis kann die Achse als Hohlachse ausgebildet sein. Entsprechende bolzenartige Vorsprünge können ebenfalls im Bereich des zweiten Fixierelements an den gegenüberliegenden Seiten der Aufnahmeeinrichtung ausgebildet sein. Die Achse kann auch mit einem Gewindeabschnitt versehen sein. Dies kann für eine axiale Verklemmung der Akkueinheit in der Aufnahmeeinrichtung genutzt werden.

Gemäß einem weiteren nicht beanspruchten

Aspekt der Erfindung ist zumindest ein Bestandteil der Achse relativ zur Aufnahmeeinrichtung rotierbar.

Die Achse kann auch einen zumindest bereichsweise exzentrischen Querschnitt aufweisen. Auch dies kann zum Verklemmen und/oder Fixieren der Akkueinheit in der Aufnahmeeinrichtung genutzt werden.

Gemäß einem weiteren Aspekt der Erfindung ist mindestens eines der Fixierelemente der Aufnahmeeinrichtung, insbesondere beide, lösbar mit dem Fahrradrahmen verbunden.

Die Fixierelemente können insbesondere als Durchsteckbolzen ausgebildet sein.

Sie können einen Gewindeabschnitt aufweisen. Der dazugehörige komplementäre Gewindeabschnitt kann vorzugsweise in die Aufnahmeeinrichtung integriert sein. Alternativ hierzu kann eine separate Mutter zur Fixierung der Fixierelemente vorgesehen sein.

Gemäß einem weiteren nicht beanspruchten Aspekt der Erfindung weist mindestens eines der Fixierelemente einen konischen Bereich, insbesondere einen konisch ausgebildeten Kopf, auf. Dies kann zu einer selbstzentrierenden Fixierung des Fixierelements und damit der Akkueinheit in der Aufnahmeeinrichtung dienen.

Der Durchsteckbolzen wird insbesondere durch mindestens eine Durchstecköffnung in der Ackueinheit, insbesondere deren Gehäuse, hindurchgeführt. Er kann auch durch eine oder zwei oder mehr Durchstecköffnungen der Aufnahmeeinrichtung und/oder im Fahrradrahmen, hindurchgeführt werden. Der Durchsteckbolzen kann auch direkt in einen Gewindeabschnitt in der Aufnahmeeinrichtung oder im Fahrradrahmen eingeschraubt werden.

Vorzugsweise ist der Durchsteckbolzen derart ausgebildet, dass er im vollständig eingesetzten Zustand nicht über die Außenkontur des jeweiligen Rohres des Fahrradrahmens hinaussteht. Er kann mittels einer Abdeckkappe, insbesondere aus Kunststoff oder Gummi, abgedeckt sein. Gemäß einem weiteren Aspekt der Erfindung ist die Steckachse der Akkueinheit mittels eines Durchsteckbolzens lösbar im Fahrradrahmen fixiert.

Dies ermöglicht es, die Akkueinheit schwimmend, jedoch verwackelungsfrei, im Fahrradrahmen anzuordnen.

Gemäß einem weiteren Aspekt der Erfindung ist die Akkueinheit elastisch gedämpft im Fahrradrahmen gelagert.

Dies wird insbesondere durch ein oder mehrere elastische und/oder flexible Bestandteile des Entkopplungs-Elements ermöglicht.

Eine elastisch gedämpfte Lagerung der Akkueinheit erhöht deren Lebensdauer.

Im Folgenden werden weitere vorteilhafte Aspekte der Akkueinheit beschrieben.

Die Akkueinheit ist insbesondere vollständig in eine Aufnahmeeinrichtung im Fahrradrahmen integrierbar. Diesbezüglich sei auf die vorhergehende Beschreibung verwiesen.

Mit Hilfe des Gehäuses der Akkueinheit kann die Aufnahmeeinrichtung nach außen abgeschlossen, insbesondere abgedichtet, insbesondere flüssigkeitsdicht, abgedichtet werden. Hierfür kann am Gehäuse eine Abdeckplatte, insbesondere mit einer elastischen Dichtlippe, vorgesehen sein. Dies dient gleichzeitig zur Sicherstellung eines sicheren, klapperfreien Sitzes der Akkueinheit in der Aufnahmeeinrichtung.

Die Akkueinheit umfasst insbesondere eine Vielzahl von Akkus. Die Akkus sind vorzugsweise quer zur Längsrichtung der Akkueinheit angeordnet. Die Akkueinheit weist eine Gesamtkapazität im Bereich von 400 bis
1000 Wh auf.

Im Gehäuse der Akkueinheit kann ein Ladeanschluss vorgesehen sein. Insbesondere kann der Ladeanschluss mehrpolig, insbesondere zwei- bis sechspolig, vorteilhafterweise vierpolig, ausgebildet sein. Vorteilhafterweise ist der Ladeanschluss wasserdicht ausgebildet. Als Ladeanschluss kann insbesondere eine USB-Buchse dienen.

Gemäß einem weiteren nicht beanspruchten Aspekt der Erfindung ist die Akkueinheit kontaktlos, insbesondere induktiv, aufladbar.

Gemäß einem weiteren nicht beanspruchten Aspekt der Erfindung ist die Akkueinheit mit einem Schloss versehen.

Dies ermöglicht es, die Akkueinheit gegen ein unbefugtes Entfernen aus der Aufnahmeeinrichtung zu sichern.

Weitere Details und Einzelheiten der Erfindung sowie deren Vorteile ergeben sich aus der Beschreibung von mehreren Alternativen anhand der Figuren. Es zeigen:
- Fig. 1: eine perspektivische Darstellung eines Ausschnitts aus einem Fahrradrahmen mit einer Aufnahme für eine Akkueinheit vor dem Einbringen der Akkueinheit in eine Aufnahme,
- Fig. 2: einen Schnitt durch den Fahrradrahmen und die Akkueinheit entlang der Längsachse des Fahrradrahmens gemäß Fig. 1 nach dem Einbringen der Akkueinheit in die Aufnahmeeinrichtung,
- Fig. 3: eine perspektivische Darstellung einer Akkueinheit gemäß einer Alternative,
- Fig. 4: eine perspektivische Darstellung eines Fahrradrahmens gemäß einer Alternative,
- Fig. 5: einen Schnitt durch den Fahrradrahmen und die Akkueinheit entlang der Längsachse des Fahrradrahmens gemäß Fig. 4 beim Einbringen der Akkueinheit in die Aufnahme,
- Fig. 6: einen Schnitt durch den Fahrradrahmen und die Akkueinheit entlang der Längsachse des Fahrradrahmens gemäß Fig. 4 nach dem Einbringen der Akkueinheit in die Aufnahme,
- Fig. 7: eine vergrößerte Schnittdarstellung eines zweiten Fixierelements entlang der Linie VII-VII aus Fig. 6, wobei der Schnitt die Befestigung der Akkueinheit an dem Fahrradrahmen durch das zweite Fixierelement zeigt,
- Fig. 8: eine vergrößerte Schnittdarstellung eines Fahrradrahmens und einer Akkueinheit im Bereich eines ersten Fixierelements gemäß einer weiteren Alternative nach dem Einbringen einer Akkueinheit in eine Aufnahmeeinrichtung,
- Fig. 9: einen Schnitt durch einen Fahrradrahmen und eine Akkueinheit entlang der Längsachse des Fahrradrahmens gemäß einer weiteren Alternative nach dem Einbringen der Akkueinheit in eine Aufnahmeeinrichtung,
- Fig. 10: einen Schnitt durch einen Fahrradrahmen und eine Akkueinheit entlang der Längsachse des Fahrradrahmens gemäß einer weiteren Alternative vor dem Einbringen der Akkueinheit in eine Aufnahmeeinrichtung,
- Fig. 11: einen Schnitt durch den Fahrradrahmen und die Akkueinheit entlang der Längsachse des Fahrradrahmens gemäß Fig. 10 nach dem Einbringen der Akkueinheit in die Aufnahmeeinrichtung,
- Fig. 12: einen Schnitt durch einen Fahrradrahmen und eine Akkueinheit entlang der Längsachse des Fahrradrahmens gemäß einer weiteren Alternative vor dem Einbringen der Akkueinheit in eine Aufnahmeeinrichtung,
- Fig. 13: einen Schnitt durch den Fahrradrahmen und die Akkueinheit entlang der Längsachse des Fahrradrahmens gemäß Fig. 12 nach dem Einbringen der Akkueinheit in die Aufnahmeeinrichtung,
- Fig. 14: einen Schnitt durch einen Fahrradrahmen und eine Akkueinheit entlang der Längsachse des Fahrradrahmens gemäß einer weiteren Alternative vor dem Einbringen der Akkueinheit in eine Aufnahmeeinrichtung,
- Fig. 15: einen Schnitt durch den Fahrradrahmen und die Akkueinheit entlang der Längsachse des Fahrradrahmens gemäß Fig. 14 nach dem Einbringen der Akkueinheit in die Aufnahmeeinrichtung,
- Fig. 16: einen Schnitt durch einen Fahrradrahmen und einer Akkueinheit entlang der Längsachse des Fahrradrahmens gemäß einer weiteren Alternative vor dem Einbringen der Akkueinheit in eine Aufnahmeeinrichtung,
- Fig. 17: einen Schnitt durch einen Fahrradrahmen und die Akkueinheit entlang der Längsachse des Fahrradrahmens gemäß Fig. 16 nach dem Einbringen der Akkueinheit in die Aufnahmeeinrichtung,
- Fig. 18: einen Schnitt durch einen Fahrradrahmen und einer Akkueinheit entlang der Längsachse des Fahrradrahmens gemäß einer weiteren Alternative vor dem Einbringen der Akkueinheit in eine Aufnahmeeinrichtung,
- Fig. 19: einen Schnitt durch den Fahrradrahmen und die Akkueinheit entlang der Längsachse des Fahrradrahmens gemäß Fig. 18 nach dem Einbringen der Akkueinheit in die Aufnahmeeinrichtung, und
- Fig. 20: eine Explosionsdarstellung einer Akkueinheit gemäß einer weiteren Variante.

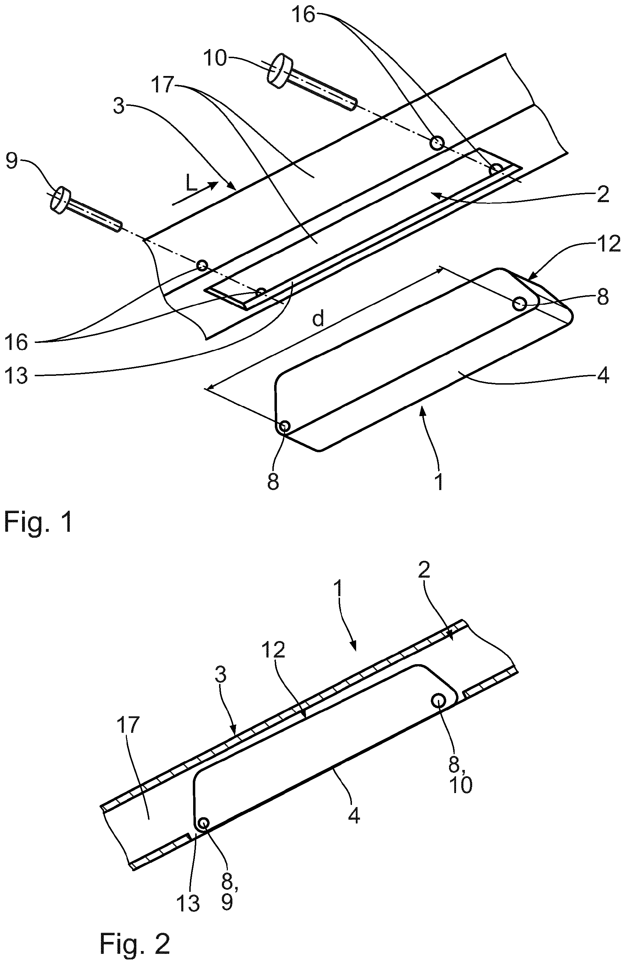

Die Fig. 1 und 2 zeigen ein Set umfassend eine Akkueinheit 1 und eine Aufnahmeeinrichtung 2 zur Aufnahme der Akkueinheit 1.

Die Aufnahmeeinrichtung 2 ist in einem Unterrohr eines Fahrradrahmens 3 integriert und weist an dessen Unterseite eine Einführöffnung 13 auf, durch welche die Akkueinheit 1 in die Aufnahmeeinrichtung 2 eingebracht wird. Gemäß der dargestellten Variante ist die Aufnahmeeinrichtung 2 einteilig mit dem Unterrohr des Fahrradrahmens 3 ausgebildet.

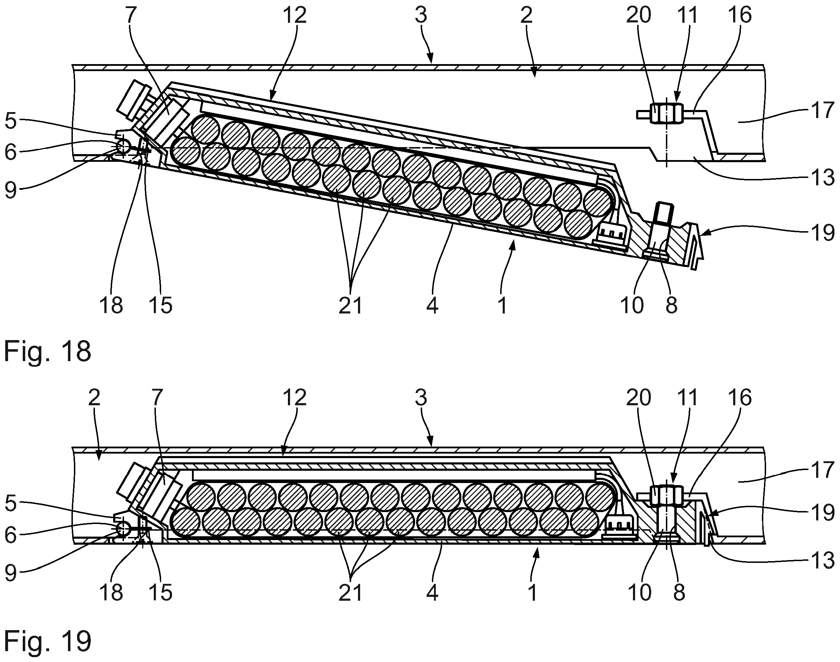

Die Akkueinheit 1 umfasst ein Gehäuse 12 und eine Abdeckplatte 4, wobei die Abdeckplatte 4 einteilig mit dem Gehäuse 12 der Akkueinheit 1 ausgebildet ist. Das Gehäuse 12 dient zur Aufnahme mindestens eines, insbesondere einer Vielzahl von Akkus 21. Die Akkus 21 sind aus Gründen der Übersichtlichkeit lediglich in den Fig. 18 und 19 dargestellt. Mittels der Abdeckplatte 4 ist die Aufnahmeeinrichtung 2 nach oder beim Einbringen der Akkueinheit 1 flüssigkeitsdicht verschließbar. Hierfür ist eine nicht dargestellte elastische Dichtlippe an der, der Aufnahmeeinrichtung 2 zugewandten Innenseite der Abdeckplatte 4 angeordnet.

Des Weiteren weist das Gehäuse 12 der Akkueinheit 1 zwei Durchstecköffnungen 8 auf, durch welche ein erstes Fixierelement 9 und ein zweites Fixierelement 10 geführt werden, um die Ackueinheit 1 in der Aufnahmeeinrichtung 2 zu befestigen. Gemäß der dargestellten Variante sind die Fixierelemente 9 und 10 als Durchsteckbolzen ausgebildet. Dabei dient die untere Durchstecköffnung zur Aufnahme des ersten Fixierelements 9 und die obere Durchstecköffnung zur Aufnahme des zweiten Fixierelements 10. Die Durchstecköffnungen 8 sind über die gesamte Breite des Gehäuses 12 der Akkueinheit 1 ausgebildet und in Längsrichtung entlang des Gehäuses 12 um einen Abstand d = 30 cm voneinander beabstandet.

An der Aufnahmeeinrichtung 2 und an dem Fahrradrahmen 3 sind seitlich der Einführöffnung 13 Seitenwände 17 ausgebildet, welche entlang der Längsrichtung L der Einführöffnung 13 verlaufen. Die Seitenwände 17 weisen jeweils zwei Aufnahmeöffnungen 16 auf, in welche das erste Fixierelement 9 sowie das zweite Fixierelement 10 aufgenommen werden. Die Aufnahmeöffnungen 16 sind dabei in Längsrichtung L um den Abstand d = 30 cm voneinander beabstandet. Die Aufnahmeöffnungen 16 dienen zur Aufnahme der durch die Durchstecköffnungen 8 geführten Fixierelemente 9 und 10.

Mittels der Aufnahmeeinrichtung 2 wird eine vorgegebene Endposition für die in die Aufnahmeeinrichtung 2 eingebrachte Akkueinheit 1 definiert, wobei unter der Endposition die vollständige Aufnahme der Akkueinheit 1 in die Aufnahmeeinrichtung 2 bezeichnet wird. In dieser Endposition sind die in einer Längsrichtung L beabstandete Durchstecköffnungen 8 des Gehäuses 12 und der Aufnahmeeinrichtung 2 bzw. des Fahrradrahmens 3 koaxial zueinander angeordnet. Zur Fixierung der Akkueinheit 1 in die Aufnahmeeinrichtung 2 werden das erste Fixierelement 9 sowie das zweite Fixierelement 10 durch die koaxial angeordneten Durchstecköffnungen 8 geführt und mittels Befestigungsmitteln in den Aufnahmeöffnungen 16 befestigt. Zur Befestigung weisen die Aufnahmeöffnungen 16 einer Seitenwand Gewinde auf, in welche die als Durchsteckbolzen ausgebildeten Fixierelemente 9 und 10 eingeschraubt werden. Die Fixierelemente 9 und 10 sind im eingeschraubten Zustand, das heißt wenn die Akkueinheit 1 in der Endposition ist, ebenflächig mit den Außenseiten der Seitenwände 17 ausgebildet.

Zusätzlich weist die Akkueinheit 1 eine Messerkontaktaufnahme 7 auf, mittels welcher eine leitende Verbindung zu einer Antriebsvorrichtung herstellbar ist. Aus Gründen der Übersichtlichkeit sind die leitende Verbindung sowie die Antriebsvorrichtung nicht dargestellt.

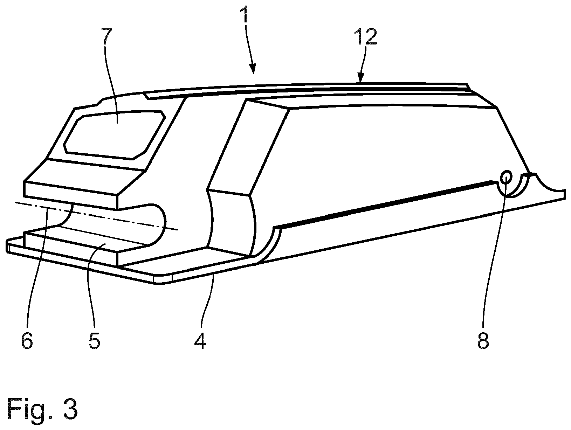

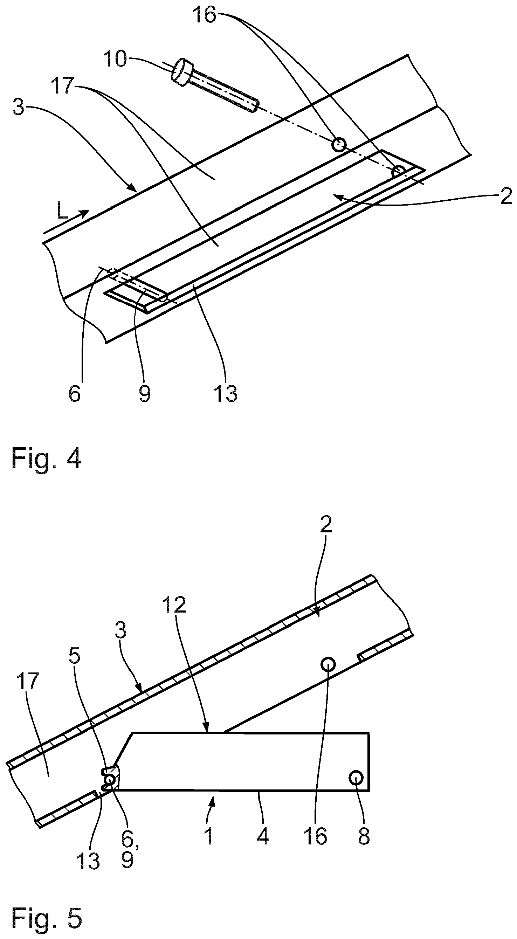

Anhand der Fig. 3 bis 7 wird eine Akkueinheit 1 sowie eine Aufnahmeeinrichtung 2 gemäß einer Alternative beschrieben. Konstruktiv gleiche Komponenten haben die gleichen Bezugsziffern, wie in den vorherigen Fig. 1 und 2.

Die Akkueinheit 1 weist dabei unterhalb der Messerkontaktaufnahme 7 ein Komplementärelement 5 auf, wodurch die Akkueinheit 1 über eine Rotationsachse 6 geschwenkt werden kann. Das erste Fixierelement 9 der Aufnahmeeinrichtung 2 ist dabei derart ausgebildet, dass das erste Fixierelement 9 mit dem Komplementärelement 5 der Akkueinheit 1 zusammenwirkt. Das erste Fixierelement 9 sowie das Komplementärelement 5 sind in der Endposition koaxial zueinander angeordnet, wodurch die Akkueinheit 1 in die Endposition in der Aufnahmeeinrichtung 2 geschwenkt werden kann.

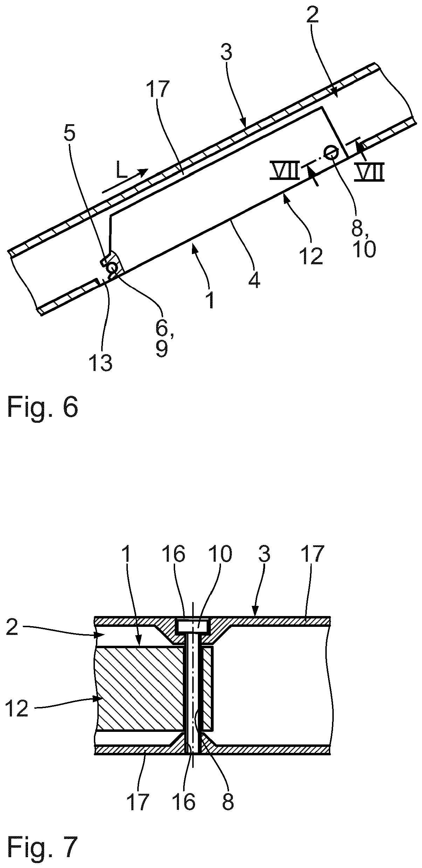

Dadurch, dass das Komplementärelement 5 sowie das erste Fixierelement 9 dieselbe Rotationsachse 6 ausbilden, ist die Akkueinheit 1 schwenkbar in die Endposition in der Aufnahmeeinrichtung 2 einbringbar. Die Akkueinheit 1 wird mittels des zweiten Fixierelements 10 in der Endposition in der Aufnahmeeinrichtung 2 fixiert. Das zweite Fixierelement ist dabei als Durchsteckbolzen ausgeführt. Aus Fig. 7 ist ersichtlich, dass das zweite Fixierelement in montiertem Zustand mit den Seitenwänden 17 ebenflächig ausbildet ist.

Gemäß dieser Alternative ist das erste Fixierelement 9 als Stift ausgebildet, während das Komplementärelement 5 gabelförmig, das heißt mit einem C-förmigen Querschnitt ausgebildet ist. Der Stift ist dabei einteilig mit der Aufnahmeeinrichtung ausgebildet. Allerdings ist ebenfalls möglich, den Stift als Durchsteckbolzen auszubilden, welcher zuvor über die Aufnahmeöffnungen 16 in der Aufnahmeeinrichtung 2 montiert wurde.

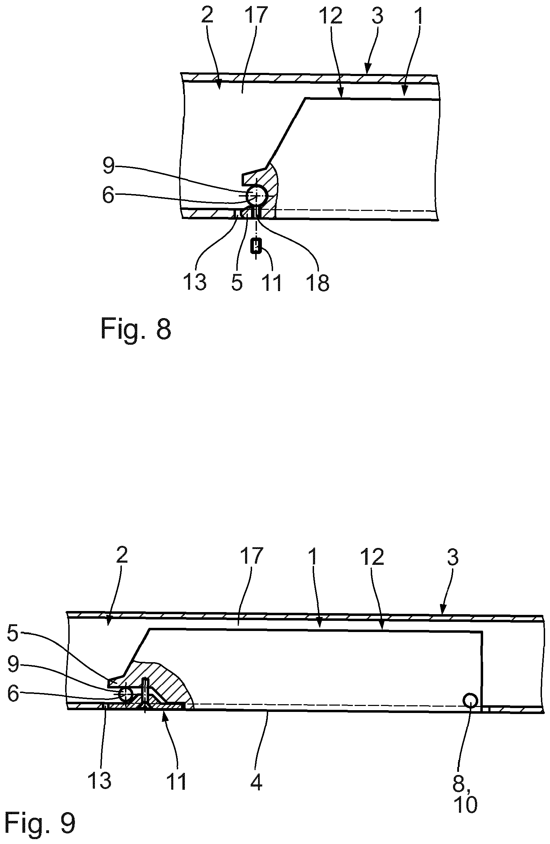

Gemäß Fig. 8 wird eine weitere Alternative eines Sets beschrieben. Konstruktiv gleiche Komponenten haben die gleichen Bezugsziffern, wie in den vorherigen Fig. 1 bis 7.

Gemäß dieser Alternative weist das Set ein zusätzliches Fixiermittel 11 zur Fixierung der Akkueinheit 1 in der Aufnahmeeinrichtung 2 auf. Das zusätzliche Fixiermittel 11 dient insbesondere zur Fixierung der Akkueinheit 1 in der Endposition. In der dargestellten Alternative ist das Fixiermittel 11 als Klemmschraube ausgebildet. Sie ist in eine Gewindebohrung 18 einbringbar. Diese durchsetzt den äußeren Arm des C-förmigen Querschnitts des Komplementärelements 5 vollständig. Durch die Gewindebohrung 18 kann die Klemmschraube nach Einbringen der Ackueinheit in die Aufnahmeeinrichtung 2 mit dem ersten Fixierelement der Aufnahmeeinrichtung 2 in Wirkverbindung gebracht werden. Hierdurch wird die Akkueinheit 1 im Fahrradrahmen 3 bzw. in der Aufnahmeeinrichtung 2 verklemmt, wodurch ein besonders fester Sitz der Akkueinheit 1 gewährleistet wird.

Anhand der Fig. 9 wird eine weitere Alternative des Sets beschrieben, wobei gleiche Komponenten die gleichen Bezugsziffern wie in den vorherigen Fig. 1 bis 8 aufweisen.

Bei dieser Alternative ist der äußere Schenkel des C-förmigen Komplementärelements 5 als Klemmplatte ausgebildet. Die Klemmplatte ist Teil des Fixiermittels 11. Zusätzlich umfasst das Fixiermittel 11 eine Schraube, mittels welcher die Klemmplatte an der Akkueinheit 1 befestigt wird. Die Schraube ist derart ausgebildet, dass sie im vollständig eingeführten Zustand nicht über die Außenkontur der Klemmplatte hinaussteht. Die Klemmplatte sowie die Abdeckplatte 4 sind dabei ebenflächig ausgebildet. Insbesondere kann an der Klemmplatte eine elastische Dichtlippe vorgesehen sein, welche ein klapperfreies und flüssigkeitsdichtes Anbringens der Klemmplatte an der Akkueinheit 1 gewährleistet.

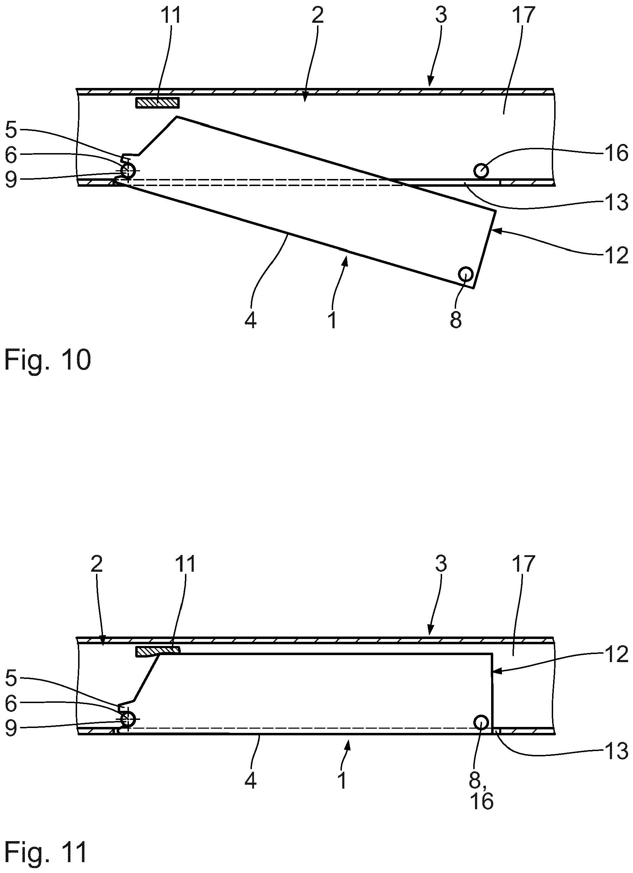

Anhand der Fig. 10 und 11 wird eine weitere Alternative eines Sets beschrieben. Konstruktiv gleiche Komponenten haben die gleichen Bezugsziffern wie in den vorherigen Fig. 1 bis 9.

Gemäß dieser Alternative ist das zusätzliche Fixiermittel 11 als elastisches Mittel ausgebildet. Das elastische Mittel ist dabei derart in der Aufnahmeeinrichtung 2 angebracht, dass es beim Einbringen der Akkueinheit 1 in die Endposition zwischen der Aufnahmeeinrichtung 2 und der Akkueinheit 1 angeordnet ist. In Endposition wird das elastische Mittel leicht komprimiert, wodurch ein sicherer und verwackslungsfreier Sitz der Akkueinheit 1 in der Aufnahmeeinrichtung 2 gewährleistet wird.

Gemäß dieser Alternative ist das elastische Mittel ein Elastomer. Allerdings sind auch Ausgestaltungen aus Gummi oder ähnlichem elastisch verformbaren Material denkbar. Es ist ebenfalls denkbar, das elastische Mittel in Form einer Feder auszugestalten.

Das elastische Mittel ist derart in der Aufnahmeeinrichtung 2 angeordnet, dass es in der Endposition der Akkueinheit 1 im Bereich der Messerkontaktaufnahme 7 liegt. Es ist ebenfalls denkbar, dass das elastische Mittel über die komplette Längsrichtung der Aufnahmeeinrichtung sowie der Akkueinheit 1 in der Aufnahmeeinrichtung 2 angebracht ist. Ebenfalls ist denkbar, dass das zusätzliche Fixiermittel nicht in der Aufnahmeeinheit 2, sondern an einer Oberseite des Gehäuses 12 der Akkueinheit 1 angebracht ist.

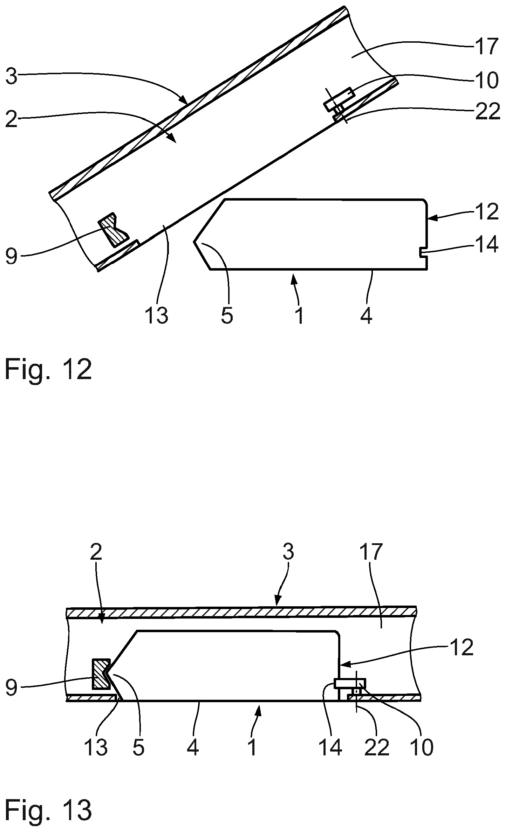

Anhand der Fig. 12 und 13 wird eine weitere Alternative des Sets beschrieben, wobei konstruktiv gleiche Komponenten die gleichen Bezugsziffern wie in den vorherigen Fig. 1 bis 11 aufweisen.

Gemäß dieser Alternative weist das erste Fixierelement 9 einen V-förmigen Querschnitt auf, in welchen das komplementär geformte Komplementärelement 5 der Akkueinheit 1 eingebracht wird. An der dem Komplementärelement 5 gegenüberliegenden Seite weist die Akkueinheit 1 eine Einbuchtung 14 auf. Diese kann dem zweiten Fixierelement 10 in Wirkverbindung gebracht werden. Das zweite Fixierelement 10 ist dabei als exzentrisches Spannelement ausgebildet. Das exzentrische Spannelement kann mittels eines daran anbringbaren zusätzlichen Betätigungshebels (nicht dargestellt) um eine Rotationsachse 22 derart verdreht werden, dass das Spannelement in die Einbuchtung 14 einbringbar ist. Hierdurch ist die Akkueinheit 1 in der Aufnahmeeinrichtung 2 fixierbar.

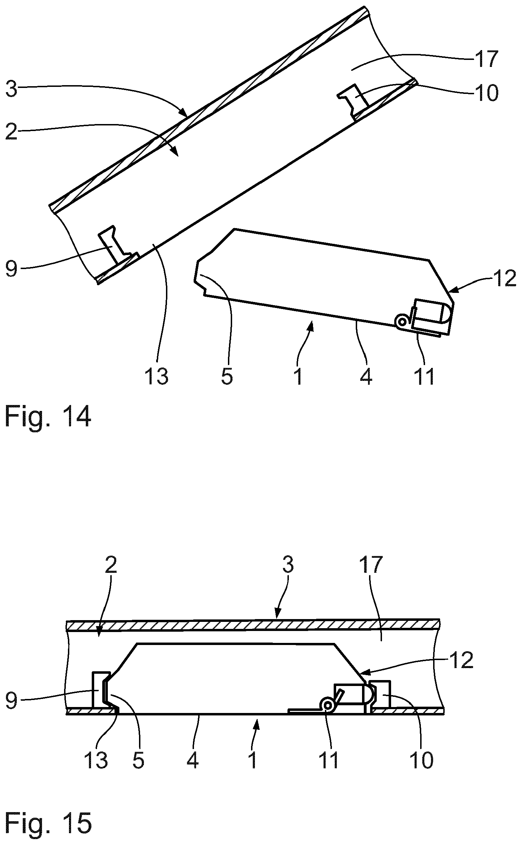

In den Fig. 14 und 15 ist eine weitere Alternative des Sets dargestellt. Konstruktiv gleiche Komponenten haben die gleichen Bezugsziffern wie in den vorangegangenen Fig. 1 bis 13.

Gemäß dieser Alternative weist das erste Fixiermittel 9 einen rechteckigen Querschnitt mit einer trapezförmigen Aussparung auf. Entsprechend weist die Akkueinheit 1 ein Komplementärelement 5 mit einem im Querschnitt trapezförmigen Fortsatz auf, welcher zu der trapezförmigen Aussparung des ersten Fixierelements 9 komplementär ausgebildet und in diesen einbringbar ist. An der dem Komplementärelement 5 gegenüberliegenden Seite weist die Akkueinheit 1 ein zusätzliches Fixiermittel 11 in Form eines Kniehebelgelenks auf, wobei durch Betätigen eines entsprechenden Hebels das Gelenk derart in das zweite Fixierelement der Aufnahmeeinrichtung 2 eingebracht wird, dass die Akkueinheit 1 in der Endposition fixiert wird. Das zweite Fixierelement weist dabei einen Querschnitt auf, in welche das zusätzliche Fixiermittel 11 bei Betätigen des Hebels eingebracht wird.

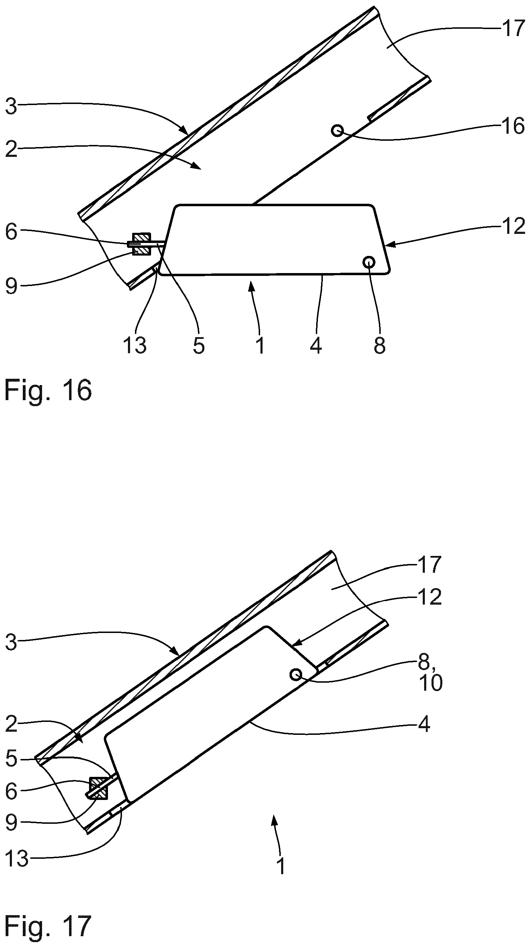

Anhand der Fig. 16 und 17 wird eine weitere Alternative des Sets beschrieben. Konstruktiv gleiche Komponenten haben die gleichen Bezugsziffern wie in den vorangegangenen Fig. 1 bis 15.

Gemäß dieser Alternative ist das Komplementärelement 5 als stiftförmiger Fortsatz ausgebildet, welcher in das erste Fixiermittel 9 einbringbar ist. Hierfür weist das erste Fixiermittel eine Öffnung auf, durch welche der Fortsatz hindurchgeführt wird. Das erste Fixiermittel 9 ist derart flexibel ausgebildet, dass die Akkueinheit 1 über die Rotationsachse 6 in die Endposition in der Aufnahmeeinrichtung 2 schwenkbar gelagert ist. Die Fixierung der Akkueinheit 1 wird durch das zweite Fixierelement erreicht, welches in der dargestellten Alternative als Durchsteckbolzen ausgebildet ist.

Insbesondere können als Komplementärelement 5 auch eine Mehrzahl von stiftförmigen Fortsätzen verwendet werden. Die Fortsätze können Kontaktstifte zur Herstellung einer elektrisch leitenden Verbindung zur Antriebseinheit bilden.

Gemäß den Fig. 18 und 19 wird eine weitere Alternative des Sets beschrieben, wobei konstruktiv gleiche Komponenten gleiche Bezugsziffern wie in den vorherigen Fig. 1 bis 17 aufweisen.

Gemäß dieser Alternative weist das Komplementärelement 5 einen C-förmigen Querschnitt auf, wobei zusätzlich ein Spalt 15 vorgesehen ist. Der Spalt 15 erstreckt sich dabei von einem tiefsten Punkt des C-förmigen Querschnitts in das Gehäuse 12 der Akkueinheit 1. Gleichzeitig weist das Komplementärelement 5 eine Gewindebohrung 18 auf, welche von der Außenseite des Gehäuses 12 ausgehend um 90° verdreht zu dem Spalt 15 angeordnet ist und diesen kreuzt. Die Gewindebohrung 18 dient zur Aufnahme des zusätzlichen Fixiermittels 11, welches gemäß der dargestellten Variante eine Klemmschraube ist. Der Spalt 15 ermöglicht es, die beiden C-förmigen Schenkel des Komplementärelements 5 mit Hilfe der Klemmschraube aufeinander zu zubewegen. Hierdurch kann eine spielfreie Wirkverbindung zwischen dem ersten Fixierelement 9 und dem C-förmigen Komplementärelement 5 erreicht werden.

An der dem Komplementärelement 5 gegenüberliegenden Seite weist die Akkueinheit 1 einen sich in der Höhe vermindernden Gehäuseabschnitt 19 sowie eine vertikale Durchstecköffnung 8 auf. Die vertikale Durchstecköffnung 8 erstreckt sich dabei, ausgehend von der Außenseite der Abdeckplatte 4, über die gesamte verminderte Höhe des Gehäuseabschnitts 19. Der Fahrradrahmen 3 und/oder die Aufnahmeeinrichtung 2 sind zu dem Gehäuseabschnitt 19 komplementär ausgebildet. Sie weisen insbesondere eine Aufnahmeöffnung 16 auf, welche in der Endposition der Akkueinheit 1 koaxial mit der vertikalen Durchstecköffnung 8 ausgebildet ist. In der Aufnahmeöffnung 16 ist eine Gewindemutter 20 befestigt. Die Akkueinheit 1 ist in der Endposition mit Hilfe einer Schraube, welche durch die Durchstecköffnung 8 gesteckt und in die Gewindemutter 20 eingeschraubt wird, fixierbar.

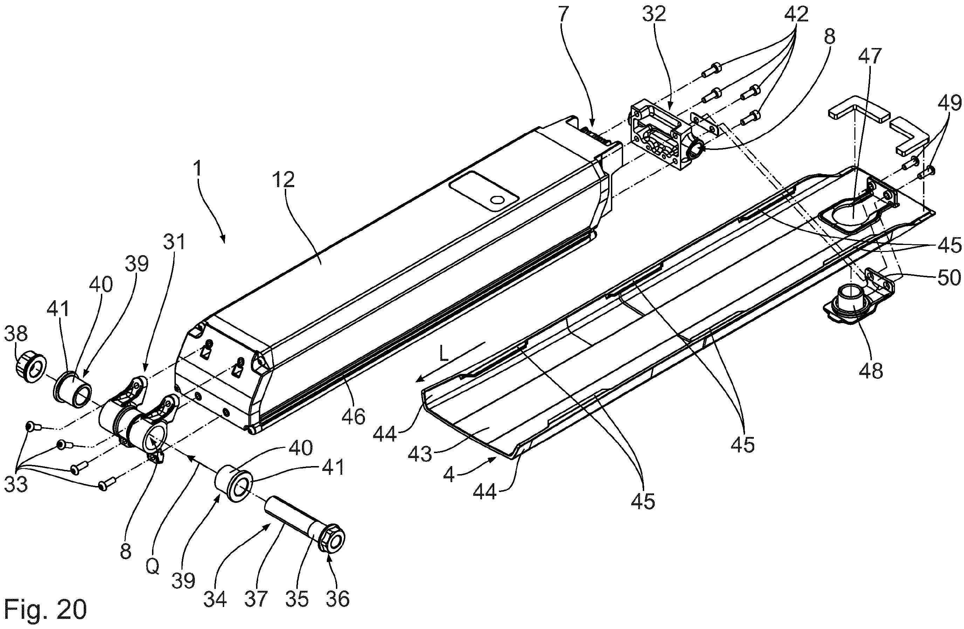

Im Folgenden werden unter Bezugnahme auf die Fig. 20 eine weitere Variante der Akkueinheit 1 bzw. vorteilhafte Aspekte derselben beschrieben. Bezüglich der allgemeinen Details der Akkueinheit 1 sei auf die Beschreibung des nicht beanspruchten Ausführungsbeispiels gemäß den Fig. 1 und 2 verwiesen.

Identische Teile werden mit identischen Bezugszeichen versehen.

Am Gehäuse 12 der Akkueinheit 1 sind zwei Aufnahme-Elemente 31, 32 zur Aufnahme von Halte-Elementen, insbesondere in Form der Fixierelemente 9, 10 vorgesehen.

Das Aufnahme-Element 31 ist mittels Befestigungsmitteln mit dem Gehäuse 12 verbunden. Als Befestigungsmittel dienen insbesondere Schrauben 33. Bei den Schrauben 33 kann es sich insbesondere um Inbus- oder Torx-Schrauben handeln.

Das Aufnahme-Element 31 ist insbesondere lösbar mit dem Gehäuse 12 verbunden.

Das Aufnahme-Element 32 kann austauschbar sein.

Das Aufnahme-Element 32 ist vorzugsweise aus Metall oder Kunststoff.

Vom Aufnahme-Element 31 wird eine Steckachse 34 gehalten. Die Steckachse 34 ist als Hohlachse ausgebildet. Sie weist einen Schaft 35 auf. Am Schaft 35 ist endseitig ein Anlageelement angeordnet. Als Anlageelement dient insbesondere ein Schraubenkopf 36.

Das Anlageelement ist vorzugsweise einteilig mit dem Schaft 35 ausgebildet.

Gemäß einer Alternative dient als Anlageelement eine Mutter, welche auf ein Außengewinde auf dem Schaft 35 aufschraubbar ist.

An dem dem Schraubenkopf 6 entgegengesetzten Ende des Schafts 35 ist ein Gewindeabschnitt 37 angeordnet.

Auf den Gewindeabschnitt 37 ist ein Anlageelement aufschraubbar. Als Anlageelement dient insbesondere eine Mutter 38.

Die Steckachse 34 sowie die Mutter 38 sind vorzugsweise aus Metall, beispielsweise aus Aluminium oder Titan.

Die Steckachse 34 ist mittels zweier Reduzierhülsen 39 im Aufnahme-Element 31 gehalten.

Die Reduzierhülsen 39 sind aus einem elastischen Material, insbesondere aus Gummi. Sie weisen einen in die Durchstecköffnung 8 einführbaren Innenabschnitt 40 auf. Sie weisen vorzugsweise eine Anschlagschulter 41 auf. Dies ist nicht zwingend notwendig.

Anstelle zweier Reduzierhülsen 39 kann auch eine einzige durchgehende Reduzierhülse vorgesehen sein. Diese weist vorzugsweise eine Länge auf, welche größer ist als die Erstreckung des Aufnahme-Elements 31 entlang einer Querrichtung Q.

Die Erstreckung des Aufnahme-Elements 31 in Querrichtung Q ist kleiner als die des Gehäuses 12 in Querrichtung Q.

Die Reduzierhülsen 39 bilden Entkopplungs-Elemente zum zumindest teilweisen mechanischen Entkoppeln der Steckachse 34 vom Gehäuse 12. Sie ermöglichen insbesondere eine mechanische Entkopplung des Fahrradrahmens 3 vom Gehäuse 12.

Der Innenabschnitt 40 der Reduzierhülsen 39 weist einen äußeren Querschnitt auf, welcher an den Innenquerschnitt der Durchstecköffnung 8 angepasst ist. Die Reduzierhülsen 39 können insbesondere reibschlüssig in der Durchstecköffnung 8, d.h. im Aufnahme-Element 31 angeordnet werden.

Die Reduzierhülsen 39 weisen einen Innenquerschnitt auf, welcher an den Außenquerschnitt der Steckachse 34 angepasst ist. Die Steckachse 34 kann insbesondere reibschlüssig in den Reduzierhülsen 39 gelagert sein. Die Lagerung kann auch ein geringes Spiel aufweisen.

Die Steckachse 34 ist, insbesondere auch mit aufgeschraubter Mutter 38, in Querrichtung Q relativ zum Aufnahme-Element 31 verschiebbar.

Die Steckachse 34 ist im in das Aufnahme-Element 31 eingeführten Zustand aufgrund der Elastizität der Reduzierhülsen 39 leicht verkippbar. Hierdurch ist es möglich, eine Übertragung von Torsionskräften vom Fahrradrahmen 3 auf das Gehäuse 12 zu reduzieren, insbesondere weitestgehend zu eliminieren.

Mit Hilfe der aufschraubbaren Mutter 38 kann die effektive Länge der Steckachse 34 an die Breite der Aufnahmeeinrichtung 2 angepasst werden. Die effektive Länge der Steckachse 34 ist insbesondere stufenlos anpassbar.

Im Bereich der Aufnahmeöffnung 16 kann ein hierfür vorgesehenes Aufnahme-Element in der Aufnahmeeinrichtung 2, insbesondere im Fahrradrahmen 3, vorgesehen sein. Das Aufnahme-Element ist vorzugsweise aus demselben Material wie die Steckachse 34, insbesondere aus Aluminium.

Durch die Steckachse 34 ist das Fixierelement 10, insbesondere in Form eines Durchsteckbolzens, hindurchsteckbar. Mit Hilfe des Fixierelements 10 kann das Gehäuse 12 über das Aufnahme-Element 31 schwimmend im Fahrradrahmen 3 bzw. der Aufnahmeeinrichtung 2 gelagert werden. Es kann insbesondere schwimmend, jedoch verwackelungsfrei in der Aufnahmeeinrichtung 2 bzw. dem Fahrradrahmen 3 gelagert werden.

Gemäß einer nicht in den Figuren dargestellten Alternative ist die Steckachse 34 mehrteilig ausgebildet. Sie kann insbesondere zwei oder mehr ineinandersteckbare Bestandteile aufweisen. Die Bestandteile der Steckachse 34 können insbesondere aufeinander gleiten. Die Steckachse weist in diesem Fall eine veränderliche Länge auf. Hierdurch können Belastungen auf den Fahrradrahmen 3 weiter reduziert werden.

Die Akkueinheit 1 weist ein zweites Aufnahme-Element 32 auf. Das zweite Aufnahme-Element 32 ist an dem in Längsrichtung L gegenüberliegenden Ende des Gehäuses 12 der Akkueinheit 1 angeordnet.

Das Aufnahme-Element 32 ist austauschbar.

Das Aufnahme-Element 32 ist mittels eines oder mehrerer Befestigungsmittel mit dem Gehäuse 12 verbunden. Es ist insbesondere mittels vier Schrauben 42 mit dem Gehäuse 12 verbunden. Es ist insbesondere mit dem Gehäuse 12 verschraubt.

Bei den Schrauben 42 handelt es sich insbesondere um Inbus- oder Torx-Schrauben.

Das Aufnahme-Element 32 ist vorzugsweise aus Metall oder Kunststoff.

Das Aufnahme-Element 32 weist die Durchstecköffnung 8 auf. Die Durchstecköffnung 8 ist vorzugsweise als Langloch oder langlochartig ausgebildet. Sie weist eine Erstreckung in Längsrichtung L auf, welche größer ist als ihre Erstreckung senkrecht zur Längsrichtung L. Dies eröffnet eine gewisse Toleranz und/oder ein gewisses Spiel in Längsrichtung L für den Einbau der Akkueinheit 1 in der Aufnahmeeinrichtung 2, insbesondere im Fahrradrahmen 3.

Das Aufnahme-Element 32 ist insbesondere von außen am Gehäuse 12 befestigt.

Außerdem weist die Akkueinheit 1 die Abdeckplatte 4 auf.

Die Abdeckplatte 4 ist vorzugsweise aus Metall, Kunststoff oder einem Faserverbundmaterial. Sie weist zumindest Abschnitte aus einem oder mehrerer derartiger Materialien auf.

Die Abdeckplatte 4 ist vorzugsweise profiliert ausgebildet. Sie umfasst einen plattenförmigen Bereich 43, an welchen sich randseitig zwei Seitenschenkel 44 anschließen. Die Seitenschenkel 44 erstrecken sich in Längsrichtung. Sie weisen eine Länge auf, welche kürzer ist als die des plattenförmigen Bereichs 43. Die Abdeckplatte 4 weist somit im Bereich mindestens eines Endes keine Seitenschenkel auf. Sie ist in diesem Bereich lediglich als flache Platte ausgebildet. Dies ermöglicht eine vereinfachte und verbesserte Anordnung der Abdeckplatte 4 am Fahrradrahmen 3.

Die Abdeckplatte 4 ist lösbar mit dem Gehäuse 12 der Akkueinheit 1 verbunden. Sie ist insbesondere auf das Gehäuse 12 der Akkueinheit 1 aufschiebbar. Sie weist insbesondere mehrere Führungselemente 45 auf, welche in zwei seitlich am Gehäuse 12 der Akkueinheit 1 angeordneten Nuten 46 aufgenommen, insbesondere geführt, werden können.

Die Nuten 46 erstrecken sich über im Wesentlichen die gesamte Länge des Gehäuses 12 der Ackueinheit 1. Sie erstrecken sich insbesondere über mindestens 70%, insbesondere mindestens 80%, insbesondere mindestens 90% der Länge der Akkueinheit 1.

Gemäß einer Alternative sind die Nuten 46 unterbrochen ausgeführt. In diesem Fall muss die Abdeckplatte 4 nicht über ihre gesamte Länge in die Nuten 46 eingeschoben werden, sondern lediglich über einen Bruchteil der Länge.

Die Führungselemente 45 sind jeweils im Bereich eines freien Endes der Seitenschenkel 44 angeordnet. Sie stehen insbesondere nach innen von den Seitenschenkeln 44 ab. Sie sind im Wesentlichen parallel zum plattenförmigen Bereich 43 ausgerichtet. Mit Hilfe der Führungselemente 45 und der Nuten 46 kann erreicht werden, dass der plattenförmige Bereich 43 im montierten Zustand der Abdeckplatte beabstandet zum Gehäuse 12 der Akkueinheit 1 angeordnet ist. Zwischen dem plattenförmigen Bereich 43 der Abdeckplatte 4 und dem Gehäuse 12 der Akkueinheit 1 verbleibt insbesondere ein Luftspalt. Hierdurch wird die Akkueinheit 1, insbesondere das Gehäuse 12 für die Akkus 21, weiter geschützt. Dies verbessert außerdem eine Wärmeabfuhr aus dem Gehäuse 12 der Akkueinheit 1. Der Abstand zwischen dem plattenförmigen Bereich 43 und der Oberfläche des Gehäuses 12 der Akkueinheit 1 kann durch strebenförmige Fortsätze stabilisiert werden. Derartige strebenförmige Fortsätze können an der Abdeckplatte 4 und/oder am Gehäuse 12 angeordnet sein.

Die Abdeckplatte 4 ist mittels zweier Schrauben 49 mit dem Gehäuse 12 der Akkueinheit 1 verschraubt. Bei den Schrauben 49 handelt es sich vorzugsweise um Inbus- oder Torx-Schrauben. Sie sind insbesondere in Längsrichtung L in das Gehäuse 12 einschraubbar.

Die Abdeckplatte 4 weist eine Aussparung 47 auf. Durch die Aussparung 47 ist ein Ladeanschluss für die Akkus 21 zugänglich. Die Aussparung 47 ist mit einem Deckelelement 48 verschließbar. Die Aussparung 47 ist mit Hilfe des Deckelelements 48 insbesondere dicht, insbesondere wasserdicht, verschließbar. Sie ist insbesondere gegen Spritzwasser geschützt.

Das Deckelelement 48 ist aus einem flexiblen und/oder elastischen Material. Es ist vorzugsweise aus Gummi.

Das Deckelelement 48 ist mit der Abdeckplatte 4 und/oder dem Gehäuse 12 der Akkueinheit 1 verbunden. Es kann insbesondere mit Hilfe der Schrauben 49 befestigt sein. Hierbei kann insbesondere ein flächiger Bereich 50 des Deckelelements 48 zwischen der Abdeckplatte 4 und dem Gehäuse 12 der Akkueinheit 1 angeordnet sein. Dies führt zu einer leicht elastischen Verbindung zwischen der Abdeckplatte 4 und dem Gehäuse 12 der Akkueinheit 1. Die Abdeckplatte 4 kann aufgrund des flächigen Bereichs 50 zwischen ihr und dem Gehäuse 12 der Akkueinheit 1 relativ zu letzterer minimal verschiebbar und/oder gedämpft sein. Dies ist beispielsweise zum Ausgleich von Mikroschwingungen vorteilhaft. Hierdurch werden insbesondere die elektrischen und/oder elektronischen Bauteile der Akkueinheit 1 besser geschützt.

## Patentansprüche

1. Akkueinheit (1) für eine Antriebsvorrichtung für ein Fahrrad aufweisend
1.1. mindestens einen Akku (21),
1.2. ein Gehäuse (12) zur Aufnahme des mindestens einen Akkus (21) mit
1.2.1. mindestens einem Aufnahme-Element (31) zur Aufnahme mindestens eines Halte-Elements (10) zum Befestigen der Akkueinheit (1) in oder an einem Fahrradrahmen (3) und
1.3. mindestens ein mit dem Aufnahme-Element (31) zusammenwirkenden Entkopplungs-Element zum zumindest teilweisen mechanischen Entkoppeln des im Aufnahme-Element (31) aufgenommenen Halte-Elements (10) vom Gehäuse (12),
1.4. wobei das mindestens eine Entkopplungs-Element eine Steckachse (34) umfasst, welche durch das mindestens eine Aufnahme-Element (31) gesteckt ist, und
1.5. wobei das mindestens eine Entkopplungs-Element mindestens ein elastisches und/oder flexibles Bestandteil umfasst, mittels welchem die Steckachse (34) in dem Aufnahme-Element (31) gehalten ist,
1.6. wobei die Steckachse (34) in Axialrichtung ein Spiel relativ zum Gehäuse (12) der Ackueinheit (1) aufweist.

2. Akkueinheit (1) gemäß Anspruch 1 **dadurch gekennzeichnet, dass** das elastische und/oder flexible Bestandteil, mittels welchem die Steckachse (34) in dem Aufnahme-Element (31) gehalten ist, als ein- oder mehrteilige Reduzierhülse (39) ausgebildet ist, welche in eine Durchstecköffnung (8) im Aufnahme-Element (31) gesteckt ist.

3. Akkueinheit (1) gemäß einem der vorhergehenden Ansprüche, **dadurch gekennzeichnet, dass** die mindestens eine Steckachse (34) als Hohlachse ausgebildet ist.

4. Akkueinheit (1) gemäß einem der vorhergehenden Ansprüche, **dadurch gekennzeichnet, dass** die Steckachse (34) an mindestens einem Ende einen Gewindeabschnitt (37) aufweist.

5. Akkueinheit (1) gemäß einem der vorhergehenden Ansprüche, **dadurch gekennzeichnet, dass** die Steckachse (34) mehrteilig ausgebildet ist, wobei mindestens zwei Teile in Axialrichtung gegeneinander verschiebbar sind.

6. Akkueinheit (1) gemäß einem der vorhergehenden Ansprüche, **gekennzeichnet durch** mindestens ein zweites Aufnahme-Element (32), welches als Langloch ausgebildet ist.

7. Akkueinheit (1) gemäß einem der vorhergehenden Ansprüche, **dadurch gekennzeichnet, dass** das mindestens eine Aufnahme-Element (31, 32) reversibel von außen am Gehäuse (12) befestigt ist.

8. Akkueinheit (1) gemäß einem der vorhergehenden Ansprüche **gekennzeichnet durch** eine Abdeckung (4) zum Verschließen einer Aufnahmeeinrichtung (2) zur Aufnahme der Akkueinheit (1), wobei die Abdeckung (4) reversibel am Gehäuse (12) fixierbar ist.

9. Set mit
9.1. einer Akkueinheit (1) für eine Antriebsvorrichtung für ein Fahrrad gemäß einem der vorhergehenden Ansprüche und
9.2. einer Aufnahmeeinrichtung (2) zur Aufnahme der Akkueinheit (1),
9.3. wobei die Akkueinheit (1) schwimmend gelagert in der Aufnahmeeinrichtung (2) anordenbar ist.

10. Set gemäß Anspruch 9, **dadurch gekennzeichnet, dass** mindestens ein Bestandteil der Ackueinheit (1) spielfrei in der Aufnahmeeinrichtung (2) fixierbar ist.

11. Fahrradrahmen (3) mit einem Set gemäß einem der Ansprüche 9 oder 10.

12. Fahrradrahmen (3) gemäß Anspruch 11 **dadurch gekennzeichnet, dass** die Akkueinheit (1) vollständig im Fahrradrahmen (3) integrierbar ist.

13. Fahrradrahmen gemäß einem der Ansprüche 11 bis 12, **gekennzeichnet durch** ein Halteelement (10), welches derart ausgebildet ist, dass es eine lösbare Fixierung der Akkueinheit (1) in der Aufnahmeeinrichtung (2) ermöglicht, wobei das Halteelement (10) eine Auswahl aus folgender Liste aufweist: ein Kniehebelgelenk, ein Kniehebelgelenk mit einer Übertotpunktstellung, eine Exzenterschraube, , eine Klemmplatte, einen Spannhebel, welcher das Gehäuse der Akkueinheit axial zur Schwenkachse des Spannhebels spannt, einen Verrastmechanismus, einen oder mehrere Magnete.

14. Fahrradrahmen (3) gemäß einem der Ansprüche 11 bis 13, **dadurch gekennzeichnet, dass** die Steckachse (34) mittels eines Durchsteckbolzens lösbar im Fahrradrahmen (3) fixiert ist.

15. Fahrradrahmen (3) gemäß Anspruch 14, **dadurch gekennzeichnet, dass** die Akkueinheit (1) elastisch gedämpft im Fahrradrahmen (3) gelagert ist.

## Claims

1. Battery unit (1) for a drive mechanism for a bicycle, comprising
1.1. at least one battery (21),
1.2. a housing (12) for receiving the at least one battery (21) with
1.2.1. at least one receptacle element (31) for receiving at least one supporting element (10) for mouting the battery unit (1) in or on a bicycle frame (3) and
1.3. at least one decoupling element interacting with the receptacle element (31) for at least partially mechanically decoupling the supporting element (10) incorporated in the receptacle element (31) from the housing (12),
1.4. wherein the at least one decoupling element comprises a slide-in shaft (34), which is stuck through the at least one receptacle element (31), and
1.5. wherein the at least one decoupling element comprises at least one elastic and/or flexible component, by means of which the slide-in shaft (34) is held in the receptacle element (31),
1.6. wherein the slide-in shaft (34) has a play in the axial direction relative to the housing (12) of the battery unit (1).

2. Battery unit (1) according to claim 1, **characterized in that** the elastic and/or flexible component, by means of which the slide-in shaft (34) is held in the receptacle element (31), is configured as a one-part or multi-part reducing sleeve (39), which is stuck through a push-through opening (8) in the receptacle element (31).

3. Battery unit (1) according to one of the preceding claims, **characterized in that** the at least one slide-in shaft (34) is configured as a hollow axle.

4. Battery unit (1) according to one of the preceding claims, **characterized in that** the slide-in shaft (34) has a threaded portion (37) on at least one end.

5. Battery unit (1) according to one of the preceding claims, **characterized in that** the slide-in shaft (34) is configured in several parts, wherein at least two parts are displaceable against one another in the axial direction.

6. Battery unit (1) according to one of the preceding claims, **characterized by** at least one second receptacle element (32), which is configured as an oblong hole.

7. Battery unit (1) according to one of the preceding claims, **characterized in that** the at least one receptacle element (31, 32) is reversibly mounted to the housing (12) from the outside.

8. Battery unit (1) according to one of the preceding claims, **characterized by** a cover (4) for closing a receptacle device (2) for receiving the battery unit (1), wherein the cover (4) is reversibly mountable to the housing (12).

9. Set with
9.1. a battery unit (1) for a drive mechanism for a bicycle according to one of the preceding claims, and
9.2. a receptacle device (2) for receiving the battery unit (1),
9.3. wherein the battery unit (1) is arrangeable in a floating manner in the receptacle device (2).

10. Set according to claim 9, **characterized in that** at least one component of the battery unit (1) can be fixed without play in the receptacle device (2).

11. Bicycle frame (3) with a set according to one of claims 9 or 10.

12. Bicycle frame (3) according to claim 11, **characterized in that** the battery unit (1) can be fully integrated in the bicycle frame (3).

13. Bicycle frame according to one of claims 11 to 12, **characterized by** a supporting element (10), which is configured such that it allows for detachable mounting of the battery unit (1) in the receptacle device (2), wherein the supporting element (10) shows a selection from the following list: a toggle joint, a toggle joint with an over dead centre position, an eccentric screw, a clamping plate, a clamping lever, which clamps the housing of the battery unit axially to the swivel axis of the clamping lever, a locking mechanism, one or several magnets.

14. Bicycle frame (3) according to one of the claims 11 to 13, **characterized in that** the slide-in shaft (34) is detachably mounted to the bicycle frame (3) by means of a through bolt.

15. Bicycle frame (3) according to claim 14, **characterized in that** the battery unit (1) is mounted in an elastically dampened manner in the bicycle frame (3).

## Revendications

1. Unité d'accumulateur (1) pour un dispositif d'entraînement pour une bicyclette, comprenant
1.1. au moins un accumulateur électrique (21),
1.2. un boîtier (12) destiné à recevoir l'au moins un accumulateur (21) avec
1.2.1. au moins un élément de réception (31) pour recevoir au moins un élément de support (10) pour fixer l'unité d'accumulateur (1) dans ou sur un cadre de bicyclette (3) et
1.3. au moins un élément de découplage coopérant avec l'élément de réception (31) pour découpler mécaniquement au moins partiellement l'élément de support (10) reçu dans l'élément de réception (31) du boîtier (12),
1.4. dans lequel ledit au moins un élément de découplage comprend un axe enfichable (34) qui est enfiché à travers ledit au moins un élément de réception (31), et
1.5. dans lequel ledit au moins un élément de découplage comprend au moins un composant élastique et/ou souple au moyen duquel l'axe enfichable (34) est maintenu dans l'élément de réception (31),
1.6. dans lequel ledit axe enfichable (34) présente dans la direction axiale un jeu par rapport au boîtier (12) de l'unité d'accumulateur (1).

2. Unité d'accumulateur (1) selon la revendication 1, **caractérisée en ce que** le composant élastique et/ou souple, au moyen duquel l'axe enfichable (34) est maintenu dans l'élément de réception (31), est réalisé sous la forme d'une douille de réduction (39) en une ou plusieurs parties, qui est enfichée dans une ouverture de passage (8) dans l'élément de réception (31).

3. Unité d'accumulateur (1) selon l'une quelconque des revendications précédentes, **caractérisée en ce que** ledit au moins un axe enfichable (34) est conçu comme un axe creux.

4. Unité d'accumulateur (1) selon l'une quelconque des revendications précédentes, **caractérisée en ce que** ledit axe enfichable (34) présente une section filetée (37) sur au moins une extrémité.

5. Unité d'accumulateur (1) selon l'une quelconque des revendications précédentes, **caractérisée en ce que** ledit axe enfichable (34) est réalisé en plusieurs parties, dans lequel au moins deux parties peuvent être déplacées l'une par rapport à l'autre dans la direction axiale.

6. Unité d'accumulateur (1) selon l'une quelconque des revendications précédentes, **caractérisée par** au moins un deuxième élément de réception (32) qui est conçu comme un trou oblong.

7. Unité d'accumulateur (1) selon l'une quelconque des revendications précédentes, **caractérisé en ce que** ledit au moins un élément de réception (31, 32) est fixé de manière réversible de l'extérieur au boîtier (12).

8. Unité d'accumulateur (1) selon l'une quelconque des revendications précédentes, **caractérisée par**
un couvercle (4) pour fermer un dispositif de réception (2) destiné à recevoir l'unité d'accumulateur (1), dans lequel le couvercle (4) peut être fixé de manière réversible sur le boîtier (12).

9. Ensemble avec
9.1. une unité d'accumulateur (1) pour un dispositif d'entraînement pour une bicyclette selon l'une quelconque des revendications précédentes et
9.2. un dispositif de réception (2) destiné à recevoir l'unité d'accumulateur (1),
9.3. dans lequel l'unité d'accumulateur (1) peut être disposée de manière flottante dans le dispositif de réception (2).

10. Ensemble selon la revendication 9, **caractérisé en ce qu**'au moins un composant de l'unité d'accumulateur (1) peut être fixé sans jeu dans le dispositif de réception (2).

11. Cadre de bicyclette (3) comprenant un ensemble selon l'une quelconque des revendications 9 ou 10.

12. Cadre de bicyclette (3) selon la revendication 11, **caractérisé en ce que** l'unité d'accumulateur (1) peut être entièrement intégrée dans le cadre de bicyclette (3).

13. Cadre de bicyclette selon l'une quelconque des revendications 11 à 12, **caractérisé par** un élément de retenue (10) qui est conçu de manière à permettre une fixation amovible de l'unité d'accumulateur (1) dans le dispositif de réception (2), dans lequel l'élément de support (10) présente un choix parmi la liste suivante : une articulation à genouillère, une articulation à genouillère avec une position de point mort dépassé, une vis excentrique, une plaque de serrage, un levier de serrage qui serre le boîtier de l'unité d'accumulateur axialement par rapport à l'axe de pivotement du levier de serrage, un mécanisme d'enclenchement, un ou plusieurs aimants.

14. Cadre de bicyclette (3) selon l'une quelconque des revendications 11 à 13, **caractérisé en ce que** l'axe enfichable (34) est fixé de manière amovible dans le cadre de bicyclette (3) au moyen d'un boulon traversant.

15. Cadre de bicyclette (3) selon la revendication 14, **caractérisé en ce que** l'unité d'accumulateur (1) est logée de manière amortie élastiquement dans le cadre de bicyclette (3).
